# FASCICULE DE BREVET EUROPEEN

(11) **EP 1 306 576 B1**
(45) Date de publication et mention de la délivrance du brevet: **03.08.2005**
(21) Numéro de dépôt: 02292567.1
(22) Date de dépôt: 17.10.2002
(51) Int. Cl.: F16F 13/10

(54) **Support antivibratoire hydraulique comportant un clapet de découplage clipsé**
Hydraulisches, schwingungsdämpfendes Lager mit einem verrasteten Entkopplungsventil
Hydraulic antivibration support with a snap-fitted decoupling valve

(30) Priorité: 29.10.2001 FR 0113967
(43) Date de publication de la demande: 02.05.2003
(73) Titulaire: HUTCHINSON, 75008 Paris (FR)
(72) Inventeur: Desmoulins, Mickael, 45310 Patay (FR); Monneau, Jean-Pierre, 28220 Douy (FR)
(74) Mandataire: Garel, Régis

(56) Documents cités:
- EP-A- 0 461 024
- FR-A- 2 751 042
- US-A- 4 765 601

## Description

La présente invention est relative aux supports antivibratoires hydrauliques comportant des clapets de découplage clipsés, et destinés par exemple à relier le bloc motopropulseur d'un véhicule à la caisse de ce véhicule.

Plus particulièrement, l'invention concerne un support antivibratoire hydraulique destiné à être interposé aux fins d'amortissement et de liaison entre deux éléments rigides (par exemple, un bloc motopropulseur de véhicule et la caisse de ce véhicule), ce support comportant :
- deux armatures rigides destinées à être reliées respectivement aux deux éléments rigides à réunir,
- un corps en élastomère reliant entre elles les deux armatures,
- une chambre de travail remplie de liquide et délimitée partiellement par le corps en élastomère,
- une paroi souple en élastomère qui est solidaire de la deuxième armature,
- une chambre de compensation remplie de liquide et délimitée partiellement par la paroi souple en élastomère,
- un passage étranglé rempli de liquide qui fait communiquer la chambre de travail avec la chambre de compensation,
- une cloison rigide séparant la chambre de travail et la chambre de compensation, cette cloison rigide comportant au moins des première et deuxième grilles qui comportent chacune une pluralité de trous de passage de liquide et qui délimitent entre elles un logement, les trous de passage de liquide de l'une des première et deuxième grilles faisant communiquer ledit logement avec la chambre de travail et les trous de passage de liquide de l'autre des première et deuxième grilles faisant communiquer ledit logement avec la chambre de compensation,
- et un clapet de découplage en élastomère comportant une plaquette qui présente des première et deuxième faces en regard respectivement des première et deuxième grilles, ladite plaquette étant montée avec un faible jeu (au moins sur une partie de sa surface) entre lesdites grilles, et ledit clapet de découplage comportant en outre un premier organe d'accrochage en élastomère qui fait saillie sur la première face de la plaquette, ledit premier organe d'accrochage étant fixé par clipsage sur la première grille avec un jeu suffisant pour permettre à ladite plaquette de se déplacer entre les deux grilles.

Le document FR-A-2 751 042 décrit un exemple d'un tel support antivibratoire, qui donne entière satisfaction au plan de son fonctionnement technique.

Dans les supports antivibratoires du type décrit dans ce document, le clapet de découplage est clipsé sur la première grille uniquement au moyen dudit premier organe d'accrochage, emboîté élastiquement dans un trou de ladite première grille qui est spécifiquement prévu à cet effet et qui ne permet pas de passage de liquide.

Le premier organe d'accrochage peut tourner à l'intérieur du trou en question, de sorte que ce montage n'impose pas de position angulaire au clapet de découplage par rapport à son axe central.

Cette liberté de mouvement impose donc en pratique de donner au clapet de découplage une forme axi-symétrique, ce qui n'est pas toujours une solution optimale.

La présente invention a notamment pour but de pallier cet inconvénient.

A cet effet, selon l'invention, un support antivibratoire du genre en question est caractérisé en ce que le clapet de découplage comporte en outre un deuxième organe d'accrochage qui fait saillie sur la première face de la plaquette, les premier et deuxième organes d'accrochages étant clipsés dans deux trous de passage de liquide de la première grille en laissant ces trous de passage de liquide partiellement libres.

Grâce à ces dispositions, le clapet de découplage est parfaitement positionné par rapport aux grilles de la cloison rigide, ce qui permet de donner à ce clapet et aux grilles un contour quelconque, et notamment un contour non axisymétrique.

Le clapet de découplage peut ainsi être clipsé sur la première grille avant l'assemblage complet du support antivibratoire, ce qui simplifie le processus d'assemblage, puisqu'il n'y a plus à se préoccuper du positionnement du clapet de découplage pendant ledit processus d'assemblage. Ceci est d'autant plus important que le processus d'assemblage en question est le plus souvent réalisé dans un bain de liquide pour garantir le bon remplissage du support antivibratoire hydraulique avec ledit liquide, de sorte que ledit processus d'assemblage est relativement délicat à mettre en oeuvre.

On notera enfin que les deux organes d'accrochage du clapet de découplage sont clipsés dans deux trous de passage de liquide, de sorte qu'il n'est plus nécessaire de réaliser des trous de clipsage prévus uniquement pour le clipsage du clapet de découplage. La fabrication des grilles de la cloison rigide s'en trouve ainsi simplifiée.

Dans des modes de réalisation préférés de l'invention, on peut éventuellement avoir recours en outre à l'une et/ou à l'autre des dispositions suivantes :
- les premier et deuxième organes d'accrochage sont fixés sur la première grille avec un jeu suffisant pour permettre à la plaquette de se déplacer entre les deux grilles ;
- le clapet de découplage présente une forme dépourvue de symétrie de révolution par rapport à un axe central perpendiculaire à la plaquette dudit clapet de découplage ;
- les organes d'accrochage coopèrent avec la première grille pour immobiliser le clapet de découplage sans jeu parallèlement à la plaquette ;
- les premier et deuxième organes d'accrochage comportent chacun d'une part, un corps qui traverse le trou de passage de liquide correspondant et est en appui contre une partie pleine de la première grille qui délimite ledit trou de passage de liquide, et d'autre part, une tête qui recouvre partiellement ladite partie pleine de la première grille ;
- les têtes des premier et deuxième organes d'accrochage font saillie respectivement l'une vers l'autre par rapport aux corps desdits premier et deuxième organes d'accrochage ;
- les trous de passage de liquide de la première grille sont répartis angulairement autour d'un axe central et présentent chacun une partie en forme de coin au voisinage dudit axe central, les corps des premier et deuxième organes d'accrochage étant en appui contre ladite partie pleine de la première grille au niveau des parties en forme de coins des trous de passage de liquide correspondants ;
- les corps des premier et deuxième organes d'accrochage présentent des portions adaptées pour épouser lesdites parties en forme de coins des trous de passage de liquide correspondants ;
- la plaquette présente une partie centrale à partir de laquelle s'étendent les organes d'accrochage, les première et deuxième faces de la plaquette présentant des formes bombées et la plaquette présentant une épaisseur maximale au niveau de ladite partie centrale.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un support antivibratoire selon une forme de réalisation de l'invention,
- la figure 2 est une vue éclatée en perspective de la cloison rigide séparant les deux chambres hydrauliques du support antivibratoire de la figure 1,
- la figure 3 est une vue en perspective du clapet de découplage du support antivibratoire de la figure 1,
- la figure 4 est une vue de côté du clapet de découplage de la figure 3,
- et la figure 5 est une vue en coupe partielle du clapet de la figure 4, la coupe étant prise selon la ligne 5-5 de la figure 4.

Sur les différentes figures, les mêmes références désignent des éléments identiques ou similaires.

On notera que dans la description qui suit, les termes tels que "haut","bas","supérieur","inférieur" sont donnés uniquement pour faciliter la compréhension du lecteur, en référence à l'exemple représenté sur les dessins, mais ne sont aucunement limitatifs.

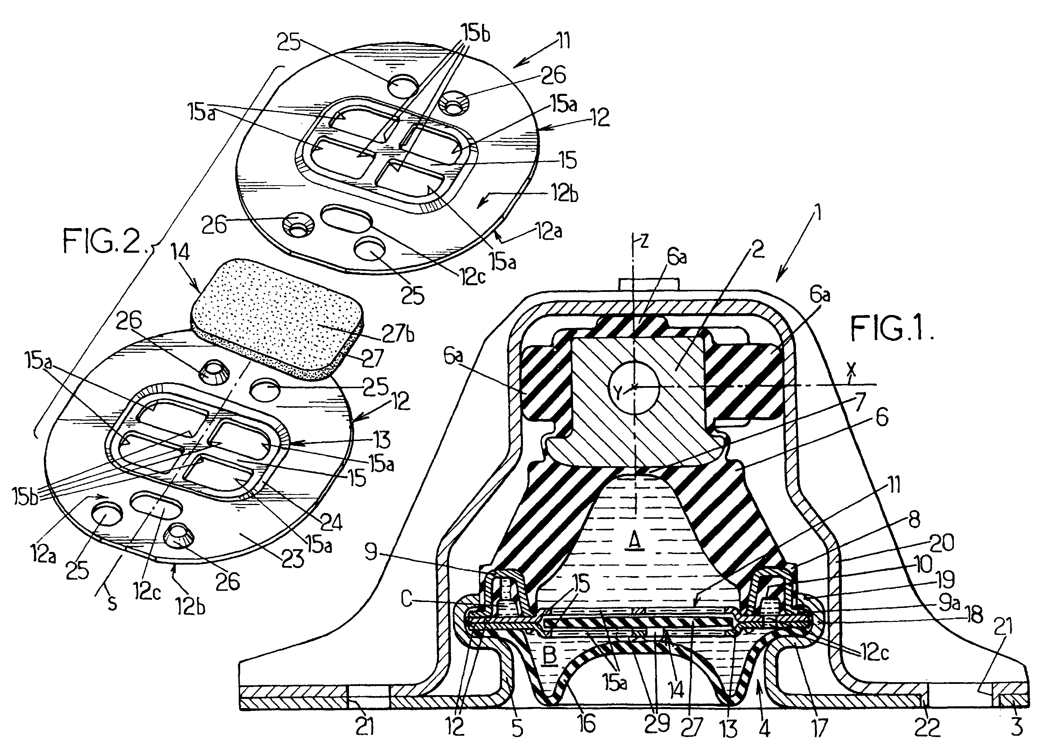

La figure 1 représente un support antivibratoire 1 qui comporte :
- une première armature métallique rigide 2, qui, dans l'exemple représenté, s'étend longitudinalement selon un axe horizontal Y et qui est destinée à être fixée par exemple au bloc motopropulseur d'un véhicule,
- une deuxième armature métallique rigide 3 qui est destinée à être fixée par exemple à la caisse du véhicule, cette deuxième armature 3 se présentant, dans l'exemple considéré, sous la forme d'une plaque de tôle horizontale dotée d'une ouverture centrale 4 présentant un bord annulaire relevé 5 qui s'étend vers le haut,
- un corps en élastomère 6 qui présente une forme de cloche s'étendant selon un axe vertical Z entre d'une part, un sommet 7 surmoulé et adhérisé sur la première armature 2 et d'autre part, une base annulaire 8 solidarisée avec la deuxième armature 3, le corps en élastomère 6 étant suffisamment résistant pour reprendre les efforts de compression dus au poids du bloc motopropulseur.

Avantageusement, la base annulaire 8 du corps en élastomère est renforcée par une couronne de tôle 9 qui est noyée dans ladite base et qui présente de préférence une section en U ouverte parallèlement à l'axe vertical Z en direction de la deuxième armature 3, c'est-à-dire vers le bas dans l'exemple représenté. La couronne 9 délimite ainsi un volume intérieur qui est partiellement rempli d'une masse élastomère délimitant une gorge 10 en arc de cercle, ouverte parallèlement à l'axe Z vers la deuxième armature 3.

Par ailleurs, le support antivibratoire 1 comporte en outre une cloison rigide 11 qui s'étend perpendiculairement à l'axe Z et qui s'applique avec étanchéité contre la base annulaire 8 du corps en élastomère, en délimitant avec celui-ci une chambre de travail A remplie de liquide.

La cloison 11 est constituée par deux pièces de tôle identiques 12 découpées et embouties, qui sont accolées en délimitant entre elles un logement de clapet 13, dans lequel est disposé un clapet de découplage 14 en élastomère comprenant une plaquette d'élastomère 27 et deux organes d'accrochage 29 moulés d'une seule pièce avec cette plaquette.

La plaquette 27 est montée dans le logement 13 avec un faible jeu parallèlement à l'axe Z, ce jeu étant par exemple de l'ordre de 0,5 mm. De plus, chacune des deux pièces de tôle 12 comporte une grille 15 dont l'une fait communiquer le logement de clapet 13 avec la chambre de travail A susmentionnée par l'intermédiaire de trous de passage de liquide 15a, et dont l'autre fait communiquer ledit logement de clapet 13 avec une chambre de compensation B remplie de liquide également par l'intermédiaire de trous de passage de liquide 15a.

Les organes d'accrochage 29 sont clipsés dans deux trous de passage de liquide 15a de l'une des grilles 15, en laissant ces tous partiellement libres. De plus, le clipsage des deux organes d'accrochage 29 dans les trous correspondants 15a présente un jeu suffisant pour que la plaquette 27 d'élastomère puisse venir alternativement en appui contre les deux grilles 15 en obturant alternativement les trous de passage 15a de ces grilles lorsque les deux armatures du support antivibratoire sont soumises à des vibrations.

Le clipsage des deux organes d'accrochage 29 permet par ailleurs d'immobiliser le clapet de découplage parallèlement à la plaquette 27, de préférence sans jeu parallèlement à ladite plaquette, ce qui permet de positionner angulairement ledit clapet de découplage par rapport à la grille correspondante 15 lors de l'assemblage du support antivibratoire. Cette disposition est particulièrement utile lorsque le clapet de découplage 14 et les grilles 15 présentent une forme qui n'est pas symétrique de révolution autour de l'axe central Z.

La chambre de compensation B, quant à elle, est séparée de la chambre de travail A par la cloison 11 et elle est délimitée entre ladite cloison 11 et une paroi souple en élastomère 16 présentant par exemple une forme de soufflet.

Avantageusement, la base annulaire 8 du corps en élastomère, la cloison 11 et le bord périphérique de la paroi souple 16 en élastomère sont assemblés par sertissage de la deuxième armature 3. En particulier, comme représenté sur la figure 1, le bord relevé annulaire 5 de la deuxième armature 3 peut se prolonger radialement vers l'extérieur par un épaulement 17 sur lequel s'appuie la périphérie de la paroi souple en élastomère, cet épaulement 17 étant prolongé parallèlement à l'axe Z en direction de la première armature 2, par un rebord annulaire 18 lui-même prolongé radialement vers l'intérieur par un bord annulaire serti 19 qui vient en appui sur un bord radial périphérique 9a de la couronne 9.

Ainsi, ladite couronne 9 et la base 8 du corps en élastomère sont appliqués fortement contre la périphérie de la pièce de tôle 12 supérieure, elle-même appliquée contre la périphérie de la pièce de tôle 12 inférieure qui vient serrer la périphérie de la paroi souple 16 contre l'épaulement 17.

Les chambres hydrauliques A et B communiquent entre elles par un passage étranglé C rempli de liquide qui est délimité entre la gorge 10 susmentionnée et la pièce de tôle 12 supérieure.

Le passage étranglé C communique avec la chambre de travail A par l'intermédiaire d'une ouverture (non représentée) ménagée radialement vers l'intérieur dans la base 8 du corps en élastomère, à travers une interruption locale de la couronne 9, à l'une des extrémités de la gorge 10 en arc de cercle. Par ailleurs, le passage étranglé C communique avec la chambre de compensation B à l'autre extrémité de la gorge 10, par l'intermédiaire de deux trous traversants 12c ménagés dans les parties périphériques des deux pièces de tôle 12, ces deux trous traversants 12c étant disposés en correspondance mutuelle et en correspondance avec le passage étranglé C.

Le support antivibratoire 1 peut éventuellement comporter, comme dans l'exemple représenté, un capot limiteur 20 en tôle emboutie, qui entoure le corps en élastomère 6 et la première armature 2. Le capot limiteur 20 est fixé à la deuxième armature 3, ces deux pièces étant avantageusement percées de trous 21 en correspondance mutuelle pour permettre la fixation de la deuxième armature 3 et du capot 20 à la caisse du véhicule.

Eventuellement, le capot limiteur 20 peut être fixé à la deuxième armature 3 par des sertissages 22 au niveau de tout ou partie des trous 21. Le capot limiteur 20 est adapté pour coopérer par butée avec des bossages 6a du corps en élastomère qui sont disposés autour de la première armature 2, pour limiter les débattements de ladite première armature parallèlement à l'axe Z à l'opposé de la deuxième armature 3, et parallèlement à un axe horizontal X perpendiculaire aux axes Y et Z, dans les deux directions.

Comme représenté plus en détail sur la figure 2, les deux pièces de tôle 12 de la cloison rigide comportent chacune une première face intérieure 12a orientée vers l'autre pièce de tôle 12, et une deuxième face externe 12b orientée vers la chambre de travail A dans le cas de la pièce de tôle 12 supérieure et vers la chambre de compensation B dans le cas de la pièce de tôle 12 inférieure.

La première face intérieure 12a de chaque pièce de tôle forme une surface d'appui annulaire périphérique 23 au milieu de laquelle est formée une cuvette centrale 24 dont le fond est découpé pour former les trous 15a la grille 15 de la pièce de tôle en question. Au moins la surface d'appui annulaire 23 de chaque pièce de tôle 12 est symétrique par rapport à un axe de symétrie S parallèle à ladite face d'appui (dans l'exemple représenté, chaque face d'appui 23 est plane et l'axe S est contenu dans le plan de ladite face d'appui). Ainsi, lorsque les deux pièces de tôle 12 sont disposées avec leurs premières faces 12a en regard l'une de l'autre, leurs surfaces d'appui 23 sont en correspondance mutuelle exacte et en contact mutuel dans leur totalité. De plus, les cuvettes 24, formées par les deux pièces de tôle 12 et délimitées extérieurement par les surfaces d'appui 23, sont alors également en correspondance mutuelle exacte, en délimitant entre elles le logement de clapet 13.

De même, le trou traversant 12c de chaque pièce de tôle 12 est symétrique par rapport à l'axe S, de sorte que lorsque les deux pièces de tôle 12 sont disposées avec leurs premières faces 12a en regard l'une de l'autre, les deux trous traversants 12c sont en correspondance mutuelle exacte.

Pour faciliter le positionnement mutuel des deux pièces de tôle 12 lors du montage du support antivibratoire, chaque pièce de tôle 12 comporte avantageusement au moins un évidement 25 ménagé dans sa surface d'appui 23, ledit évidemment 25 étant symétrique par rapport à l'axe S d'un téton 26 embouti faisant saillie par rapport à ladite surface d'appui 23.

L'évidemment 25 et le téton 26 correspondant ont des formes complémentaires, de sorte que, lorsque les deux pièces de tôle 12 sont disposées avec leurs premières faces 12a en regard l'une de l'autre, chaque téton 26 d'une des pièces de tôle vient s'emboîter dans l'évidement 25 de l'autre pièce de tôle.

Chaque pièce de tôle 12 peut bien évidemment comporter plusieurs tétons 26 et plusieurs évidements 25 symétriques des tétons 26 par rapport à l'axe S : dans l'exemple représenté, chaque pièce de tôle 12 comporte deux tétons 26 et deux évidements 25.

Les évidements 25 et tétons 26 ne créent pas de fuite entre les chambres A, B, dans la mesure où ils sont recouverts avec étanchéité par la base 8 du corps en élastomère et par la périphérie de la paroi souple 16 lorsque le support antivibratoire 1 est monté.

Comme on peut le voir sur la figure 2, les cuvettes 24 des deux pièces de tôle 12 présentent des formes qui, dans l'exemple considéré, sont dépourvues de symétrie de révolution par rapport à l'axe central Z du support antivibratoire et la plaquette 27 présente une forme correspondante. Dans l'exemple représenté, les cuvettes 24 et la plaquette 27 présentent une forme sensiblement rectangulaire à coins arrondis.

Par ailleurs, les trous 15a des deux grilles 15, ou au moins les trous 15a de la grille 15 dans laquelle sont clipsés les organes d'accrochage 29, sont avantageusement répartis angulairement autour de l'axe central Z et présentent chacun une partie en forme de coin au voisinage dudit axe central Z.

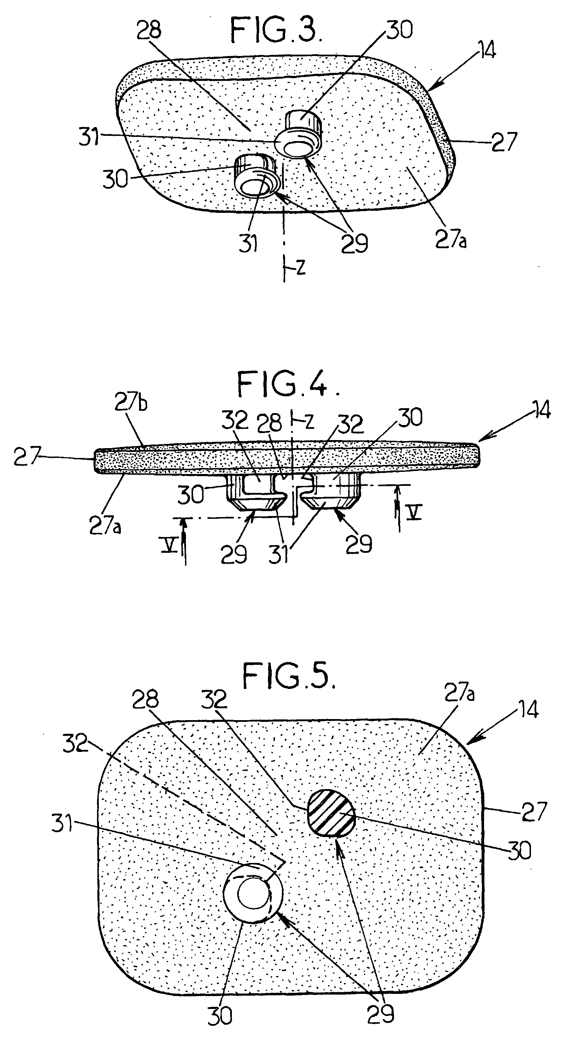

Comme représenté sur les figures 3 à 5, les organes d'accrochage 29 du clapet de découplage peuvent se présenter par exemple sous la forme de deux broches qui s'étendent parallèlement à l'axe Z à partir d'une partie centrale 28 de la plaquette 27, sur l'une 27a des faces de ladite plaquette.

Chacune de ces broches présente un corps 30 qui s'étend depuis la face 27a de la plaquette d'élastomère jusqu'à une extrémité libre formant une tête élargie 31 de section circulaire.

Les corps 30 des deux organes d'accrochage 29 présentent des sections non circulaires, avec des portions 32 en forme de coins qui sont orientés l'une vers l'autre et qui sont adaptées pour venir en appui contre les parties en forme de coins 15b de deux trous de passage 15a diamétralement opposés par rapport à l'axe Z, en épousant sensiblement lesdites parties 15b.

Les têtes élargies 31 font saillie l'une vers l'autre parallèlement à la plaquette 27 par rapport aux parties 32 en forme de coins susmentionnés, en recouvrant la partie pleine située au centre de la grille 15.

De préférence, comme cela est bien visible sur la figure 4, les deux faces 27a, 27b de la plaquette 27 peuvent être bombées et présenter par exemple des formes de calottes sphériques de grand rayon (par exemple, de 30 à 50cm de rayon). Cette disposition permet d'éviter des bruits de claquement lorsque la plaquette 27 vient s'appliquer alternativement sur les deux grilles 15 en cours de fonctionnement. On notera que, le cas échéant, la partie centrale 28 de la plaquette 27 pourrait être en appui permanent contre les parties centrales des deux grilles 15, le jeu susmentionné du clapet de découplage 14 par rapport auxdites grilles 15 étant alors présent uniquement au niveau des parties périphériques de la plaquette 27.

Le support antivibratoire qui vient d'être décrit fonctionne comme suit : lorsque les deux armatures 2, 3 sont soumises à des mouvements vibratoires relatifs, ces mouvements vibratoires entraînent des transferts de liquide entre la chambre de travail A et la chambre de compensation B :
- lorsque ces mouvements vibratoires sont de relativement faible fréquence (par exemple inférieure à 20 Hz) et de relativement grande amplitude (par exemple supérieure à 1 mm), ils se traduisent par des transferts de liquide entre les chambres A et B par l'intermédiaire du passage étranglé C, qui génère un amortissement de ces mouvements vibratoires,
- et lorsqu'il s'agit de mouvements vibratoires de haute fréquence (par exemple, supérieure à 20 Hz) et de faible amplitude (par exemple inférieure à 1 mm), ces mouvements vibratoires sont filtrés par le clapet de découplage 14 qui oscille librement entre les deux grilles 15 (les transferts de liquide entre les deux chambres A et B sont alors essentiellement dus aux mouvements du clapet 14).

## Revendications

1. Support antivibratoire hydraulique destiné à être interposé aux fins d'amortissement et de liaison entre deux éléments rigides, ce support comportant:
- deux armatures rigides (2, 3) destinées à être reliées respectivement aux deux éléments rigides à réunir,
- un corps en élastomère (6) reliant entre elles les deux armatures (2, 3),
- une chambre de travail (A) remplie de liquide et délimitée partiellement par le corps en élastomère (6),
- une paroi souple en élastomère (16) qui est solidaire de la deuxième armature (3),
- une chambre de compensation (B) remplie de liquide et délimitée partiellement par la paroi souple en élastomère (16),
- un passage étranglé (C) rempli de liquide qui fait communiquer la chambre de travail (A) avec la chambre de compensation (B),
- une cloison rigide (11) séparant la chambre de travail (A) et la chambre de compensation (B), cette cloison rigide comportant au moins des première et deuxième grilles (15) qui comportent chacune une pluralité de trous de passage de liquide (15a) et qui délimitent entre elles un logement (13), les trous de passage de liquide (15a) de l'une des première et deuxième grilles faisant communiquer ledit logement (13) avec la chambre de travail et les trous de passage de liquide (15a) de l'autre des première et deuxième grilles faisant communiquer ledit logement (13) avec la chambre de compensation (B),
- et un clapet de découplage (14) en élastomère comportant une plaquette (27) qui présente des première et deuxième (27a, 27b) faces en regard respectivement des première et deuxième grilles (15), ladite plaquette étant montée avec un faible jeu entre lesdites grilles (15), et ledit clapet de découplage (14) comportant en outre un premier organe d'accrochage (29) en élastomère qui fait saillie sur la première face (27a) de la plaquette, ledit premier organe d'accrochage étant fixé par clipsage sur la première grille (15),
**caractérisé en ce que** le clapet de découplage (14) comporte en outre un deuxième organe d'accrochage (29) qui fait saillie sur la première face (27a) de la plaquette, les premier et deuxième organes d'accrochages (29) étant clipsés dans deux trous de passage de liquide (15a) de la première grille en laissant ces trous de passage de liquide partiellement libres.

2. Support antivibratoire selon la revendication 1, dans lequel les premier et deuxième organes d'accrochage (29) sont fixés sur la première grille (15) avec un jeu suffisant pour permettre à la plaquette (27) de se déplacer entre les deux grilles.

3. Support antivibratoire selon la revendication 1 ou la revendication 2, dans lequel le clapet de découplage (14) présente une forme dépourvue de symétrie de révolution par rapport à un axe central (Z) perpendiculaire à la plaquette (27) dudit clapet de découplage (14).

4. Support antivibratoire selon l'une quelconque des revendications précédentes, dans lequel les organes d'accrochage (29) coopèrent avec la première grille (15) pour immobiliser le clapet de découplage (14) sans jeu parallèlement à la plaquette (27).

5. Support antivibratoire selon l'une quelconque des revendications précédentes, dans lequel les premier et deuxième organes d'accrochage (29) comportent chacun d'une part, un corps (30) qui traverse le trou de passage de liquide (15a) correspondant et est en appui contre une partie pleine de la première grille (15) qui délimite ledit trou de passage de liquide, et d'autre part, une tête (31) qui recouvre partiellement ladite partie pleine de la première grille (15).

6. Support antivibratoire selon la revendication 5, dans lequel les têtes (31) des premier et deuxième organes d'accrochage (29) font saillie respectivement l'une vers l'autre par rapport aux corps (30) desdits premier et deuxième organes d'accrochage.

7. Support antivibratoire selon la revendication 5 ou la revendication 6, dans lequel les trous de passage de liquide (15a) de la première grille (15) sont répartis angulairement autour d'un axe central (Z) et présentent chacun une partie en forme de coin (15b) au voisinage dudit axe central, les corps (30) des premier et deuxième organes d'accrochage étant en appui contre ladite partie pleine de la première grille (15) au niveau des parties en forme de coins (15b) des trous de passage de liquide correspondants.

8. Support antivibratoire selon la revendication 7, dans lequel les corps (30) des premier et deuxième organes d'accrochage présentent des portions (32) adaptées pour épouser lesdites parties en forme de coins des trous de passage de liquide (15a) correspondants.

9. Support antivibratoire selon l'une quelconque des revendications précédentes, dans lequel la plaquette (27) présente une partie centrale (28) à partir de laquelle s'étendent les organes d'accrochage (29), les première et deuxième faces (27a, 27b) de la plaquette présentant des formes bombées et la plaquette présentant une épaisseur maximale au niveau de ladite partie centrale (28).

## Patentansprüche

1. Hydraulischer Anti-Vibrations-Träger, welcher dazu vorgesehen ist, zwecks Dämpfung und Verbindung zwischen zwei steifen Elementen angeordnet zu werden, der Träger umfassend:
- zwei steife Armaturen (2,3), welche jeweils zum Verbinden mit zwei steifen, zu vereinigenden Elementen vorgesehen sind,
- einen Elastomer-Körper (6), welcher die zwei Armaturen (2,3) zwischen ihnen verbindet,
- eine mit Flüssigkeit gefüllte, und teilweise durch den Elastomer-Körper (6) begrenzte Arbeits-Kammer (A),
- eine flexible Elastomer-Wand (16), welche mit der zweiten Armatur (3) verbunden ist,
- eine mit Flüssigkeit gefüllte und teilweise durch die flexible Elastomer-Wand (16) begrenzte Kompensations-Kammer (B),
- einen mit Flüssigkeit gefüllten, gedrosselten Durchgang (C), welcher die Arbeits-Kammer (A) mit der Kompensations-Kammer (B) kommunizieren lässt,
- eine steife Trennwand (11), welche die Arbeits-Kammer (A) von der Kompensations-Kammer (B) trennt, wobei die steife Trennwand wenigstens ein erstes und ein zweites Gitter (15) aufweisen, welche jeweils eine Mehrzahl von Flüssigkeits-Durchgangs-Löchern (15a) aufweisen, und welche zwischen sich einen Zwischenraum (13) begrenzen, wobei die Flüssigkeits-Durchgangs-Löcher (15a) von einem des ersten und zweiten Gitters diesen Zwischenraum (13) mit der Arbeits-Kammer kommunizieren lassen, und wobei die Flüssigkeits-Durchgangs-Löcher (15a) von dem anderen des ersten und zweiten Gitters diesen Zwischenraum (13) mit der Kompensations-Kammer (B) kommunizieren lassen,
- und eine Entkopplungs-Klappe (14) aus Elastomer, welche eine Scheibe (27) umfasst, welche einer erste und zweite Seite (27a, 27b) dem ersten beziehungsweise zweiten Gitter (15) zuwendet, wobei diese Scheibe mit einem geringen Spiel zwischen diesen Gittern (15) befestigt ist, und wobei die Entkopplungs-Klappe (14) außerdem eine erste Einrast-Vorrichtung (29) aus Elastomer umfasst, welche auf der ersten Seite (27a) der Scheibe vorsteht, wobei die erste Einrast-Vorrichtung mittels Einklinken an dem ersten Gitter (15) fixiert ist,
**dadurch gekennzeichnet, dass** die Entkopplungs-Klappe (14) außerdem eine zweite Einrast-Vorrichtung (29) umfasst, welche an der ersten Seite (27a) der Scheibe vorsteht, wobei die erste und die zweite Einrast-Vorrichtung (29) in zwei Flüssigkeits-Durchgangs-Löchern (15a) des ersten Gitters eingeklinkt sind, wobei diese Flüssigkeits-Durchgangs-Löcher teilweise frei gelassen werden.

2. Anti-Vibrations-Träger gemäß Anspruch 1, wobei die erste und die zweite Einrast-Vorrichtung (29) an dem ersten Gitter (15) mit einem Spiel fixiert sind, welches ausreicht, um der Scheibe (27) zu ermöglichen, sich zwischen den zwei Gittern zu verschieben.

3. Anti-Vibrations-Träger gemäß Anspruch 1 oder Anspruch 2, wobei die Entkopplungs-Klappe (14) eine Form aufweist, welche von Rotations-Symmetrie gegenüber einer senkrecht zur Scheibe (27) der Entkopplungs-Klappe (14) angeordnete Zentral-Achse (Z) frei ist.

4. Anti-Vibrations-Träger gemäß einem der vorhergehenden Ansprüche, wobei die Einrast-Vorrichtungen (29) mit dem ersten Gitter (15) zusammenwirken, um die Entkopplungs-Klappe (14) ohne Spiel parallel zur Scheibe (27) zu immobilisieren.

5. Anti-Vibrations-Träger gemäß einem der vorhergehenden Ansprüche, wobei die erste und zweite Einrast-Vorrichtung (29) jeweils einerseits einen Körper (30) umfassen, welcher das zugehörige Flüssigkeits-Durchgangs-Loch (15a) quert, und gegen eine ebene Partie des ersten Gitters (15) drückt, welche dieses Flüssigkeits-Durchgangs-Loch begrenzt, und andererseits einen Kopf (31), welcher diese ebene Partie des ersten Gitters (15) teilweise abdeckt.

6. Anti-Vibrations-Träger gemäß Anspruch 5, wobei die Köpfe (31) der ersten und zweiten Einrast-Vorrichtung (29) jeweils gegenüber dem Körper (30) der ersten und zweiten Einrast-Vorrichtung gegeneinander vorstehen.

7. Anti-Vibrations-Träger gemäß Anspruch 5 oder Anspruch 6, wobei die Flüssigkeits-Durchgangs-Löcher (15a) des ersten Gitters (15) rings einer Zentral-Achse (Z) in Winkel-Richtung unterteilt sind, und in der Nachbarschaft der Zentral-Achse jeweils eine Partie in Ecken-Form (15b) aufweisen, wobei die Körper (30) der ersten und zweiten Einrast-Vorrichtung gegen die auf der Höhe der Ecken-förmigen Partien (15b) der zugehörigen Flüssigkeits-Durchgangs-Löcher (15a) angeordnete ebene Partie des ersten Gitters (15) drücken.

8. Anti-Vibrations-Träger gemäß Anspruch 7, wobei die Körper (30) der ersten und zweiten Einrast-Vorrichtung Teile (32) aufweisen, welche zum Kombinieren mit den Ecken-förmigen Partien der zugehörigen Flüssigkeits-Durchgangs-Löcher (15a) geeignet sind.

9. Anti-Vibrations-Träger gemäß einem der vorhergehenden Ansprüche, wobei die Scheibe (27) eine Zentral-Partie (28) aufweist, von welcher aus sich die Einrast-Vorrichtungen (29) erstrecken, wobei die erste und zweite Seite (27a, 27b) der Scheibe gewölbte Formen aufweisen, und wobei die Scheibe eine maximale Dicke auf der Höhe der Zentral-Partie (28) aufweist.

## Claims

1. A hydraulic vibration-damping support designed to be interposed between two rigid elements for damping and interconnection purposes, said support comprising:
two rigid strength members (2, 3) designed to be connected to respective ones of the two rigid elements to be interconnected;
an elastomer body (6) connecting together the two strength members (2, 3);
a working chamber (A) filled with liquid and defined in part by the elastomer body (6);
a flexible elastomer wall (16) which is secured to the second strength member (3);
a compensation chamber (B) filled with liquid and defined in part by the flexible elastomer wall (16);
a constricted passage (C) filled with liquid and which puts the working chamber (A) into communication with the compensation chamber (B);
a rigid partition (11) separating the working chamber (A) from the compensation chamber (B), said rigid partition being provided with at least first and second gratings (15), each of which has a plurality of liquid-passing holes (15a), the gratings defining between them a housing (13), the liquid-passing holes (15a) of one of the first and second gratings putting said housing (13) into communication with the working chamber, and the liquid-passing holes (15a) of the other of the first and second gratings putting said housing (13) into communication with the compensation chamber (B); and
a decoupling flap (14) made of elastomer and comprising a pad (27) which has first and second faces (27a, 27b) facing respective ones of the first and second gratings (15), said pad being mounted with a small amount of clearance between said gratings (15), and said decoupling flap (14) further comprising a first elastomer fastening member (29) which projects from the first face (27a) of the pad, said first fastening member being fixed by clipping to the first grating (15);
said vibration-damping support being **characterized in that** the decoupling flap (14) further comprises a second fastening member (29) which projects from the first face (27a) of the pad, said first and second fastening members (29) being clipped into respective ones of two liquid-passing holes (15a) in the first grating, while leaving said liquid-passing holes unobstructed in part.

2. A vibration-damping support according to claim 1, in which the first and second fastening members (29) are fixed to the first grating (15) with clearance that is sufficient to enable the pad (27) to move between the two gratings.

3. A vibration-damping support according to claim 1 or claim 2, in which the decoupling flap (14) has a shape that is not circularly symmetrical about a central axis (Z) that is perpendicular to the pad (27) of said decoupling flap (14).

4. A vibration-damping support according to any preceding claim, in which the fastening members (29) co-operate with the first grating (15) to hold the decoupling flap (14) stationary without clearance parallel to the pad (27).

5. A vibration-damping support according to any preceding claim, in which each of the first and second fastening members (29) comprises firstly a body (30) that passes through the corresponding liquid-passing hole (15a) and that is in abutment against an uninterrupted portion of the first grating (15) that defines said liquid-passing hole, and secondly a head (31) which overlaps in part said uninterrupted portion of the first grating (15).

6. A vibration-damping support according to claim 5, in which the heads (31) of the first and second fastening members (29) project towards each other from the bodies (30) of said first and second fastening members.

7. A vibration-damping support according to claim 5 or claim 6, in which the liquid-passing holes (15a) of the first grating (15) are distributed angularly about a central axis (Z), and each of them has a wedge-shaped portion (15b) in the vicinity of said central axis, the bodies (30) of the first and second fastening members being in abutment against said uninterrupted portion of the first grating (15) at the wedge-shaped portions (15b) of the corresponding liquid-passing holes.

8. A vibration-damping support according to claim 7, in which the bodies (30) of the first and second fastening members have portions (32) adapted to fit closely to said wedge-shaped portions of the corresponding liquid-passing holes (15a).

9. A vibration-damping support according to any preceding claim, in which the pad (27) has a central portion (28) from which the fastening members (29) extend, the first and second faces (27a, 27b) of the pad having convex shapes, and the pad having its maximum thickness at said central portion (28).
